(19) Europäisches Patentamt
European Patent Office
Office européen des brevets

(11) Publication number: 0 092 644
A1

# (12) EUROPEAN PATENT APPLICATION

(21) Application number: 83100928.7

(22) Date of filing: 01.02.83

(51) Int. Cl.³: C 03 C 3/30
H 01 B 1/08, G 01 N 27/36

(30) Priority: 26.04.82 US 371860

(43) Date of publication of application:
02.11.83 Bulletin 83/44

(84) Designated Contracting States:
DE FR GB IT

(71) Applicant: International Business Machines Corporation
Old Orchard Road
Armonk, N.Y. 10504(US)

(72) Inventor: Kendall, Arthur Harr
569 Blueberry Lane
Franklin Lakes New Jersey 07417(US)

(72) Inventor: Rohr, Robert Lewis
117 Brown Road
Scarsdale New York 10583(US)

(72) Inventor: Shafer, Merrill Wilbert
105 Loder Road
Yorktown Heights New York 10598(US)

(74) Representative: Lancaster, James Donald
IBM United Kingdom Patent Operations Hursley Park
Winchester Hants S021 2JN(GB)

## (54) Corrosion-resistant conductive glass.

(57) Alkali resistant high melting point glass containing about 15% - 20% zirconium dioxide forms an optimum composite structure with 1 to 6 parts glass frit to 1 to 2 parts ruthenium dioxide when fired at 800 to 1000°C.

Composition

| 1 to 2 parts | : | 1 to 6 parts glass frit | |
|---|---|---|---|
| | : | $SiO_2$ | 6778% |
| | : | $ZrO_2$ | 1520% |
| $RuO_2$ 100% | : | $Na_2O$ | 411% |
| | : | $Al_2O_3$ | 1% |
| | : | $K_2O$ | 0.5 4% |
| | : | $Li_2O$ | 0.7 1% |

EP 0 092 644 A1

Croydon Printing Company Ltd.

0092644

# CORROSION-RESISTANT CONDUCTIVE GLASS

## BACKGROUND OF THE INVENTION

### Field of the Invention

The invention is an alkali corrosion resistant conductive high temperature glass composite using ruthenium dioxide and zirconia glass.

### Description of the Prior Art

The quest for corrosion resistant electrodes for miniature precision work such as printheads has led to the use of noble metal in glass techniques and various printed circuit techniques involving conductors embedded in ceramic. Printheads and other precision electrode devices are known to suffer from corrosion problems when operated in an alkaline environment.

The use of ruthenium dioxide (sintered in a binder layer of low melting point glass in a thin film) has been described by C. J. Sambucetti and H. K. Seitz, "Sintering of Powdered $RuO_2$ to Fabricate Electrode Structures," IBM Technical Bulletin, Vol. 23, No. 9, February 1981.

U. S. Patent 4,000,346, Dowell, "Optically Transparent, Electrically Conductive Coating," issued December 28, 1976, describes a technique for depositing a thin film of a noble metal oxide such as ruthenium on the surface of an optically transparent substrate such as glass. Dowell also describes mixing a valve metal oxide (titanium, zirconium, hafnium, vanadium, niobium, tantalum, chromium, molybdenum, and wolfram) with the noble metal oxide to increase resistance to thermal decomposition, abrasion and agressive chemical environments. The coating includes no silicon dioxide, no aluminum oxide, no sodium oxide, no potassium oxide and no lithium oxide. It is a coating, not a glass. U. S. Patent 3,006,775, Chen, "Ceramic Material and Method of Making the Same," issued October 31, 1961, describes a glass containing zirconium dioxide but no ruthenium dioxide.

U. S. Patent 4,100,050, Cook et al, "Coating Metal Anodes to Decrease Consumption Rates," issued July 11, 1978, describes coating metal anodes to decrease consumption rates. It describes using ruthenium dioxide as a coating on a titanium electrode, but as a coating, not a glass.

Other techniques for using layers of $RuO_2$, $RuO_2$ powder in plastic and other deposition techniques are disclosed in the following U. S. patents:

3,168,467, Dreyer, "SelfCleaning Strainers" issued February 2, 1965;

3,334,352, Abbondante et al, "Thermal Recording," issued August 1, 1967;

3,761,954, Hansen et al, "Stylus," issued September 25, 1973;

3,891,513, Yasumori et al, "Electrical Coloration Recording Sheet," issued June 24, 1975;

3,951,757, Yoshino et al, "Process of Making Electrorecording," issued April 20, 1976;

4,007,107, Johnson, "Electrolytic Anode," issued February 8, 1977;

4,017,366, Hsieh et al, "Thermographic Printing Method," issued April 12, 1977;

4,042,936, Yoshikawa, "Electrosensitive Recording Method," issued April 25, 1978;

Re29,419, DeCraene, "Finely Divided $RuO_2$/Plastic Matrix," issued September 27, 1977;

4,131,463, Tsuboi et al, "Electric Recording Process of Images Using Electron Sensitive Layer Containing Trivalent Cobalt Complex and Compound Having Conjugated μ Bond System," issued December 26, 1978;

4,112,140, Heikel, "Electrode Coating Process," issued September 5, 1978; and

4,154,665, Boulton, "Diaphragm Cell," issued May 15, 1979.

Sealing the electrodes in glass has not been totally satisfactory because the sealing glasses tend to be relatively poor in alkali corrosion resistance.

## SUMMARY OF THE INVENTION

It is an object of the invention to provide a conductive glass composite which combines the required conductivity with wear resistance and resistance to corrosion by alkalies and yet has a satisfactory thermal expansion and a high melting point.

Another object of the invention is to form a conductive glass composite of ruthenium dioxide fine particles in about 1:6 to 2:1 ratio with a high melting point, high alkali resistance zirconia glass.

A conductive glass composite is prepared of ruthenium dioxide fine particles, in a ratio of 1:6 to 2:1 $RuO_2$ to zirconium dioxide bearing glass frit, fired to a temperature of 800-1000$^{o}$C, which is sufficient to glaze the composite without destroying the conductive properties of the ruthenium dioxide.

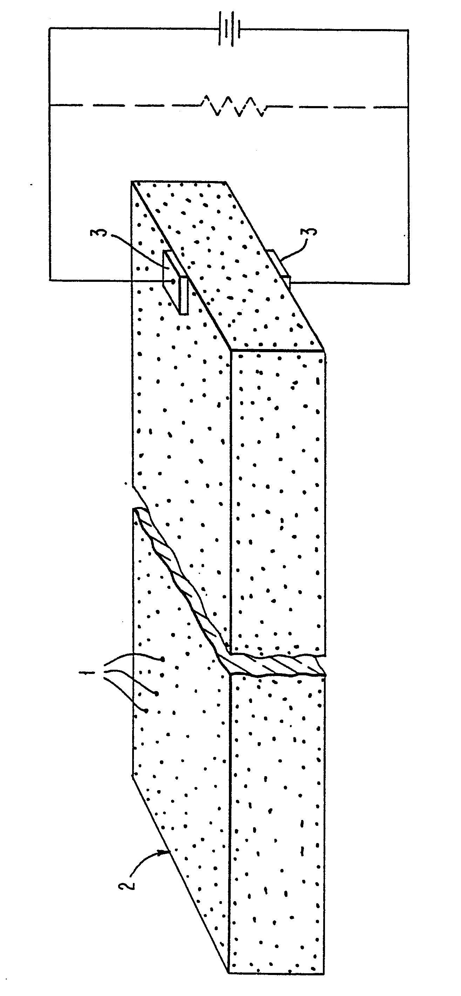

## BRIEF DESCRIPTION OF THE DRAWING

The FIGURE is a "not-to-scale" depiction of the composite nature of the alkali resistant conductive glass of the invention.

## DETAILED DESCRIPTION OF THE DRAWING

The FIGURE shows the alkali resistant conductive glass composite of the invention. Ruthenium dioxide particles 1 in the glass 2 provide conductive paths through the glass. The conduction mechanism includes contact between individual ruthenium dioxide particles, but in some cases the ruthenium dioxide particles are completely surrounded by glass but of such minimal thickness that the dielectric is not sufficient to inhibit conductivity. The conductivity via metal and ions is very small and can be neglected.

In the FIGURE, contacts (shown schematically) provide a relatively low resistance connection of electrical current through the glass.

## PREPARATION

Finely ground $RuO_2$ and glass frit materials are mixed together in the following proportions:

### COMPOSITION

| 1 to 2 parts | | : | 1 to 6 parts glass frit | |
|---|---|---|---|---|
| | | : | $SiO_2$ | 67-78% |
| | | : | $ZrO_2$ | 15-20% |
| $RuO_2$ | 100% | : | $Na_2O$ | 4-11% |
| | | : | $Al_2O_3$ | 1% |
| | | : | $K_2O$ | 0.5- 4% |
| | | : | $Li_2O$ | 0.7- 1% |

(Firing temperature 800$^{\circ}$ 1000$^{\circ}$C.)

Glass Frit Composition Examples
(wt %)

| $SiO_2$ | $ZrO_2$ | $Na_2O$ | $Al_2O_3$ | $K_2O$ | $Li_2O$ | |
|---|---|---|---|---|---|---|
| 67.2 | 15.6 | 10.5 | 1.0 | 3.9 | 0.7 | 98.9 |
| 71 | 15 | 11 | 1.0 | 0.5 | 1.0 | 99.5 |
| 71 | 20 | 06 | 1.0 | 0.5 | 1.0 | 99.5 |
| 78 | 15 | 04 | 1.0 | 0.5 | 1.0 | 99.5 |

The glass and $RuO_2$ are ground separately and mixed or ground together in a ball mill for mixing, pressed into a desired shape and heated in a crucible at a temperature of 800-1000°C until sintered. The resultant conductive composite material can then be used in the shape in which it was produced, or it can be ground into a fine powder and reformed to a desired shape and fired again.

Alternatively, a paste may be made up of the glass frit and $RuO_2$ and placed by known techniques such as silk screening in the desired configuration on or through holes in a ceramic substrate and then heated to 800-1000°C sufficient to bond the composite to a substrate. This forms a conductive pattern with the personality required for complex electrical devices such as printheads. The resulting device is conductive and resistant to mechanical wear as well as alkali corrosion. The resulting conductive glass composite is also resistant to normal reagents such as water and acids.

The invention provides an optimum wear resistance, alkali resistance and conductivity not known by previous formulations, and, in $RuO_2$/glass frit ratios of 1:1 to 2:1 is particularly useful as an electrode for use in electrochemical printing.

CLAIMS

1. An alkali resistant conductive glass composite comprising silicon dioxide, ruthenium dioxide, zirconium dioxide and sodium oxide together with relatively small amounts of aluminum oxide, potassium oxide and lithium oxide, fired at 800 to 1000°C.

2. An alkali resistant conductive glass composite according to Claim 1, comprising finely divided $RuO_2$ and glass-forming frit of the following wt %:

| | |
|---|---|
| $SiO_2$ | 67.2 |
| $ZrO_2$ | 15.6 |
| $Na_2O$ | 10.5 |
| $Al_2O_3$ | 1.0 |
| $K_2O$ | 3.9 |
| $Li_2O$ | 0.7 |
| - | 1.1 |

3. An alkali resistant conductive glass composite according to Claim 1, comprising finely divided $RuO_2$ and glass-forming frit of the following wt %:

| | |
|---|---|
| $SiO_2$ | 71 |
| $ZrO_2$ | 15 |
| $Na_2O$ | 11 |
| $Al_2O_3$ | 1 |
| $K_2O$ | 0.5 |
| $Li_2O$ | 1 |
| - | 0.5 |

4. An alkali resistant conductive glass composite according to Claim 1, comprising finely divided $RuO_2$ and glass-forming frit of the following wt %:

| | |
|---|---|
| $SiO_2$ | 71 |
| $ZrO_2$ | 20 |
| $Na_2O$ | 6 |
| $Al_2O_3$ | 1 |
| $K_2O$ | 0.5 |
| $Li_2O$ | 1 |
| - | 0.5 |

5. An alkali resistant conductive glass composite according to Claim 1, comprising finely divided $RuO_2$ and glass-forming frit of the following wt %:

| | |
|---|---|
| $SiO_2$ | 78 |
| $ZrO_2$ | 15 |
| $Na_2O$ | 4 |
| $Al_2O_3$ | 1 |
| $K_2O$ | 0.5 |
| $Li_2O$ | 1 |
| - | 0.5 |

6. An alkali resistant conductive glass composite according to any of claims 1-6, comprising 1-2 parts finely divided $RuO_2$ and 1-6 parts glass forming frit.

7. A corrosion-and-wear-resistant electrode comprising a configuration of conductive glass - $RuO_2$ composite having the ratio of 1 to 2 $RuO_2$ to 1 glass by weight, the glass having the composition:

COMPOSITION

| 1 to 2 parts | | : | 1 part glass frit | |
|---|---|---|---|---|
| | | : | $SiO_2$ | 67-78% |
| | | : | $ZrO_2$ | 15-20% |
| $RuO_2$ | 100% | : | $Na_2O$ | 4-11% |
| | | : | $Al_2O_3$ | 1% |
| | | : | $K_2O$ | 0.5- 4% |
| | | : | $Li_2O$ | 0.7- 1% |

3
3
1
2

European Patent Office

**0092644**
Application number

# EUROPEAN SEARCH REPORT

EP 83100928.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB - A - 1 599 711 (IBM CORP.) * Page 4, table I, glass composition C-7 280; page 2, lines 15-19 * -- | 1,3 | C 03 C 3/30<br>H 01 B 1/08<br>G 01 N 27/36 |
| Y | US - A - 3 637 530 (CASALE) * Claims 1-5; column 1, line 73 - column 2, line 6; column 3, lines 23-30; column 4, lines 13-42 * ---- | 1-7 | |

TECHNICAL FIELDS SEARCHED (Int. Cl. 3)

C 03 C
H 01 B
G 01 N
H 01 C
G 01 D
H 01 M

The present search report has been drawn up for all claims

| Place of search | Date of completion of the search | Examiner |
|---|---|---|
| VIENNA | 11-07-1983 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document

EPO Form 1503. 03.82